Europäisches Patentamt

European Patent Office

Office européen des brevets

(11) Publication number: **0 294 925**
**A2**

# EUROPEAN PATENT APPLICATION

(21) Application number: 88303332.6

(51) Int. Cl.⁴ **H05K 13/08**

(22) Date of filing: 13.04.88

(30) Priority: 14.04.87 US 38305

(43) Date of publication of application:
14.12.88 Bulletin 88/50

(84) Designated Contracting States:
AT BE CH DE ES FR GB GR IT LI LU NL SE

(71) Applicant: **ALLTEQ INDUSTRIES**
**930 Auburn Court**
**Fremont California 94538(US)**

(72) Inventor: **Chiponis, Lawrence J.**
**1319 Peralta Court**
**San Jose California 95120(US)**

(74) Representative: **Cross, Rupert Edward Blount
et al**
**BOULT, WADE & TENNANT 27 Furnival Street
London EC4A 1PQ(GB)**

(54) Coplanarity testing device for surface mounted components.

(57) The testing device checks the coplanarity of the leads (14) of a surface mounted component (12) on a plane defined by the three longest leads of the component. The device comprises first and second conductive plates (20, 26) separated by a non-conductive spacer (24) and conductive spring means (24) having arms (28) providing electrical connections between the plates (20, 26). One of the plates (20) carries a plurality of non-conductive pins (16) associated with the arms (28). When the leads (14) of a component (12) are applied to the pins (16) the arms (28) associated with pins (16) contacted by leads (14) having coplanarity within the thickness of the spacer-means (24) break their connections between the plates (20, 26) while any connections remaining are indicated by an earthed indicator means (30).

FIG. – 3

# COPLANARITY TESTING DEVICE FOR SURFACE MOUNTED COMPONENTS

The invention relates to a coplanarity testing device for surface mounted components.

In the field of printed circuit board assembly, surface mounted components are rapidly replacing components that are mounted in through holes in a printed circuit board. The advantages of surface mounted components are that they take up less room on the board and they do not need plated through holes in the board, all of which means lower cost.

One of the more serious problems existing with surface mounted components is that the contact points of their leads do not always lie in the same plane. Thus, when a surface mounted component lies on a printed circuit board, some of the leads are so high off the solder paste on the circuit board that they do not make connection to the circuit board when the solder is reflowed by heat. See, for example, the article entitled "The Effect of Lead Coplanarity on PLCC Solder Joint Strength" by William D. Smith, SURFACE MOUNT TECHNOLOGY, June 1986.

One present method used to check the coplanarity of the leads of surface mounted components before they are assembled to printed circuit boards incorporates the use of vision systems. Using four cameras, one for each side of a component, or one camera and means for rotating the component, the vision systems can measure the relative position of the leads with respect to each other.

One disadvantage of this method is the inaccuracy in calibrating the position of each of the four cameras or the inaccuracy in rotating a component in a plane. The systems are also slow because they are measuring and comparing, and their speed is dependent on the number of leads on a component.

According to this invention there is provided a coplanarity testing device for surface mounted components, characterised by first and second conductive plates; non-conductive spacer means sandwiched between said first and second plates; a plurality of non-conductive pins carried by said first plate; conductive spring means located between said spacer means and either of said first and second plates, said spring means comprising a plurality of arms individually associated with said pins and each normally providing an electrical connection between said first and second plates; and means to indicate whether any one or more of said arms is providing an electrical connection between said first and second plates, the arrangement being such that when the leads of a component to be tested are applied to said pins to urge the associated arms of the spring means out of electrical contact with said first plate said indicator means will serve to indicate whether all of said leads of the component have coplanarity within the thickness of said spacer means.

The device of the invention is a go/no-go comparator that can screen many types of surface mounted component, j-bend or gull-wing, and its speed of use is the same for components with many leads as it is for a component with few leads. No electrical voltages or currents are applied to the component, the leads of which are electrically grounded at all times.

This invention will now be described by way of example with reference to the drawings, in which:-

Fig.1 shows a typical j-bend surface mounted component;

Fig. 2 shows a typical gull-wing surface mounted component;

Fig. 3 is a vertical sectional view through a device according to the invention;

Fig. 4 illustrates use of the device of Fig. 3 when all of the leads of a surface mounted component being tested are coplanar;

Fig. 5 illustrates use of the device of Fig. 3 when the leads of a surface mounted component being tested are not coplanar; and

Fig. 6 is a top plan view of a conductive spring means which forms a part of the device of Fig. 3.

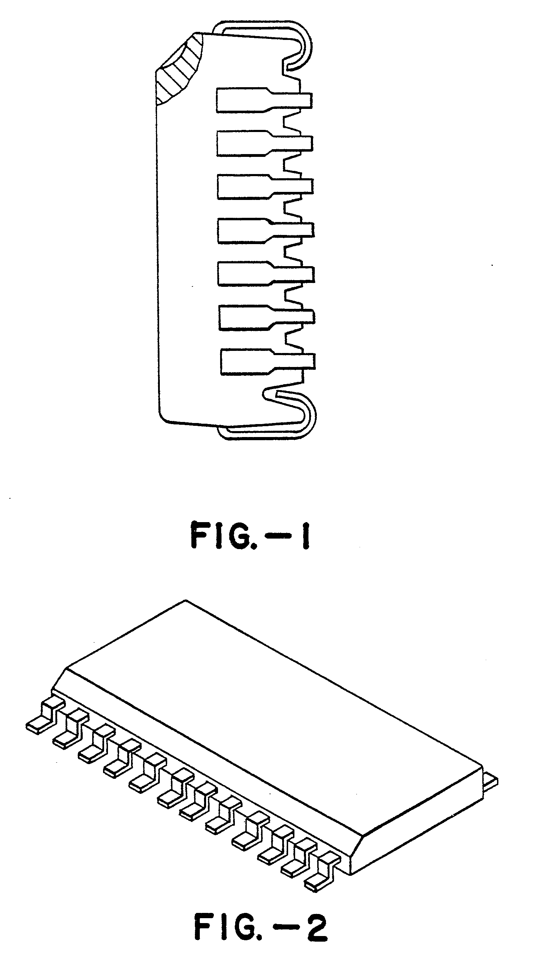

Fig.1 shows a typical j-bend surface mounted component, and Fig. 2 shows a typical gull-wing surface mounted component. The physical dimensions, tolerances and coplanarity specifications for such components are well known in the art.

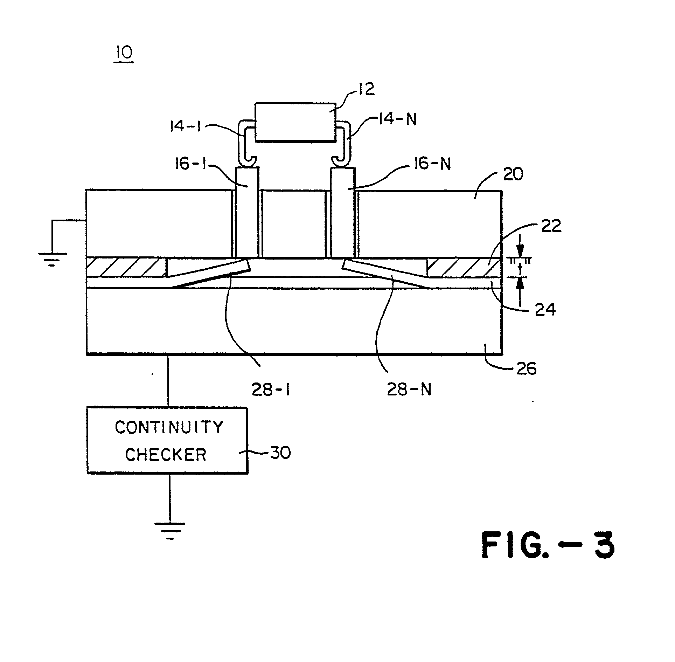

The coplanarity tester device 10 of Fig. 3 includes a conductive upper plate 20 which is located above a second conductive plate 26, with the desired coplanarity spacing provided by an interposed non-conductive spacer 22 which can be of any desired thickness "t".

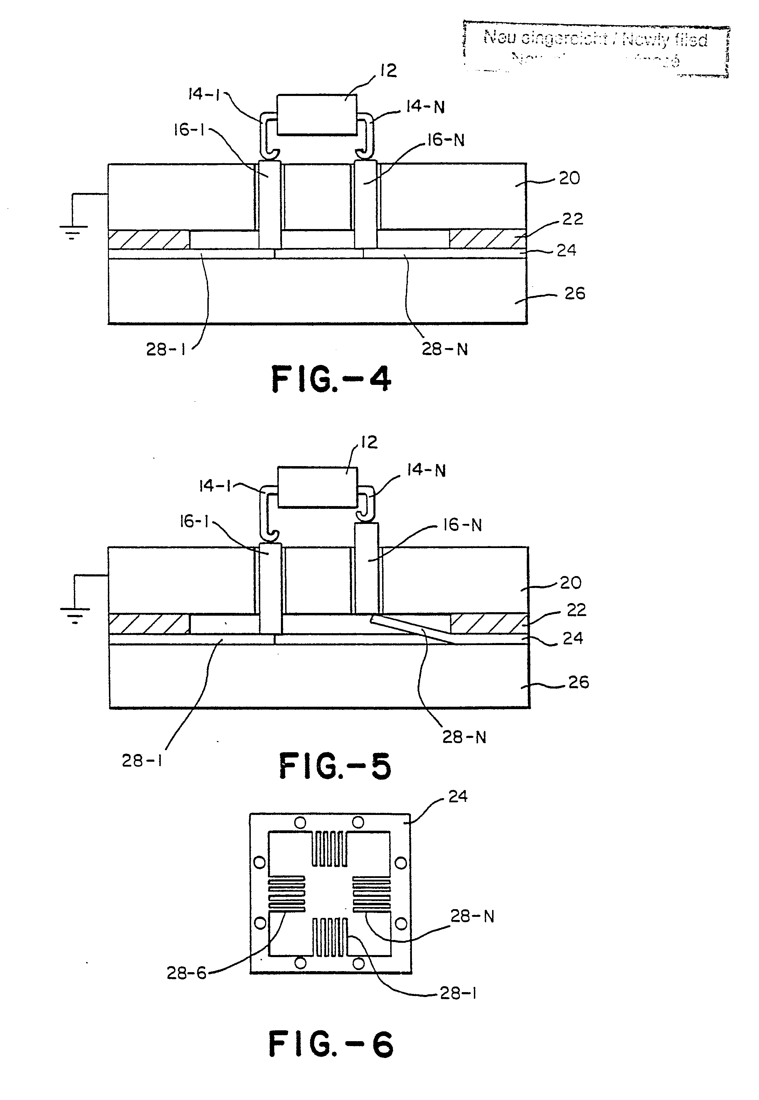

Conductive spring means 24 including a plurality of electrically conductive arms 28-1 through 28-N, which is depicted in more detail in Fig. 6, are located between the spacer 22 and lower plate 26, the arms 28 providing electrical connections between the plates 20 and 26 when the device 10 is in the rest condition.

Arranged in the upper plate 20 are a plurality of non-conductive pins 16-1 through 16-N, which are individually associated with the arms 28 of conductive spring means 24.

The device 10 also includes a continuity checker 30, which serves to indicate whether electrical connection is still made by conductive spring means 24 (a go/no-go comparator). As indicated in Fig. 3, the plate 20 and checker 30 are electrically grounded.

The non-conductive pins 16 are made of A ρ $_2$O$_3$ and are approximately 3.2 mm (.125 inches) in thickness.

The conductive plates 20, 26 are made of 303SS and are both approximately 3 mm (.115 inches) in thickness.

The non-conductive spacer 22 is made of A ρ $_2$O$_3$ and has a thickness depending upon the coplanarity specification (eg 0.5 to 1 mm [.002 inches to .004 inches]).

The conductive spring means 24 is made of BeCu and is approximately 0.76 mm (.003 inches) in thickness.

The tester 10 is depicted in Fig. 3 with a surface mounted component 12 (such as a j-bend package) with appropriate leads 14-1 through 14-N mounted thereon.

The leads 14-1 through 14-N are applied to corresponding non-conductive pins 16-1 through 16-N with a suitable force so as to apply a bias to the respective arms 28-1 through 28-N of conductive spring means 24.

When the surface mounted component 12 is pushed down with sufficient force to overcome the force of the spring arms 28-1 through 28-N, at least three of the spring arms 28 will rest on the upper surface of the lower plate 26. This is because the three longest leads 14 of the package 12 will define a plane that the leads 14 will rest on.

If all of the leads 14 of the component 12 are coplanar, all of the spring arms 28-1 through 28-N would rest on the upper surface of the lower plate 26. This is depicted in Fig. 4. The upper and lower plates 20, 26 would then be electrically isolated from each other. If, however, any lead 14 of a component 12 was off the plane formed by the three longest leads 14 (the plane that the package will rest on) by more than the thickness t of the non-conductive spacer 22, then electrical continuity would still be maintained between the upper plate 20 and the lower plate 26, because at least one of the conductive spring arms 28 would still be in contact with the upper plate 20. This is depicted in Fig. 5 where arm 28-1 is still in electrical contact with plate 20.

Fig. 6 depicts a top view of one arrangement of the conductive spring means 24 of Fig. 3, including a plurality of arms 28-1,....,28-N, which correspond to the particular lead arrangement of the surface mounted component to be tested.

Thus, coplanarity can be checked to within the thickness of the non-conductive spacer 22, which can be made to any dimension. If the lead coplanarity is within the thickness "t", all conductive spring arms 28 will be separated from the upper plate 20, and there will be no conductivity measured between the upper plate 20 and lower plate 26. If the lead coplanarity exceeds the thickness "t", there will still be at least one spring arm 28 that will not be separated from the upper plate 20 and there will be electrical continuity between the upper and lower plates 20 and 26.

## Claims

1. A coplanarity testing device (10) for surface mounted components, characterised by first and second conductive plates (20,26); non-conductive spacer means (24) sandwiched between said first and second plates (20, 26); a plurality of non-conductive pins (16-1 to 16-N) carried by said first plate (20); conductive spring means (24) located between said spacer means (24) and either of said first and second plates (20, 26), said spring means (24) comprising a plurality of arms (28-1 to 16-N) individually associated with said pins (16-1 to 16-N) and each normally providing an electrical connection between said first and second plates (20, 26); and means (30) to indicate whether any of one or more of said arms (28) is providing an electrical connection between said first and second plates (20, 26), the arrangement being such that when the leads (14) of a component (12) to be tested are applied to said pins (16) to urge the associated arms (28) of the spring means (24) out of electrical contact with said first plate (20), said indicator means (30) will serve to indicate whether all of said arms (28) are urged out of electrical contact with said first plate (20) and thus whether all of said leads (14) of the component (12) have coplanarity within the thickness of said spacer means (24).

2. A device as claimed in Claim 1, characterised in that said pins (16) project from said first plate (20) at its side remote from said second plate (26).

FIG. — 1

FIG. — 2

10

FIG. - 3

FIG.-4

FIG.-5

FIG.-6